# EUROPÄISCHE PATENTSCHRIFT

(11) **EP 1 865 210 B1**
(45) Veröffentlichungstag und Bekanntmachung des Hinweises auf die Patenterteilung: **01.09.2010**
(21) Anmeldenummer: 07011291.7
(22) Anmeldetag: 08.06.2007
(51) Int. Cl.: F16B 25/10

(54) **Schraube**
Screw
Vis

(30) Priorität: 07.06.2006 DE 202006009048 U
(43) Veröffentlichungstag der Anmeldung: 12.12.2007
(73) Patentinhaber: Knipping Verbindungstechnik GmbH, 58566 Kierspe (DE)
(72) Erfinder: Schmidt, Harald, 51580 Reichshof (DE); Hadrian, Bernd, 42287 Wuppertal (DE); Schomaker, Christian, 51643 Gummersbach (DE)
(74) Vertreter: Behrendt, Arne

(56) Entgegenhaltungen:
- WO-A-2004/052219
- DE-A1- 10 258 238
- DE-C1- 3 909 725
- US-A- 3 156 152

## Beschreibung

Die vorliegende Erfindung betrifft eine materialverdrängende, gewindeerzeugende Schraube mit einem Kopf und einem Reibabschnitt, der sich von einer Reibspitze zu einem am Kopf auslaufenden Gewindeabschnitt erstreckt, wobei der Reibabschnitt von zwei kegelstumpfförmigen oder zumindest annähernd kegelstumpfförmigen, sich in Richtung auf den Kopf aufweitenden Teilabschnitten gebildet wird, die unmittelbar aneinander angrenzen und fließend ineinander übergehen, wobei der Kegelwinkel des an die Reibspitze angrenzenden ersten Teilabschnittes größer als der Kegelwinkel des an den Gewindeabschnitt angrenzenden zweiten Teilabschnitts ist.

Derartige Schrauben dienen zum Fügen von dünnen Blechen bis zu einer Dicke von etwa 1 mm. An ihrem dem Kopf abgewandten Ende weisen diese Schrauben einen Reibabschnitt auf, der dazu dient, das Kernloch zu erzeugen. Die Schraube rotiert mit einer hohen Drehzahl auf dem noch geschlossenen Blech, dessen Material sich durch die Reibungswärme erhitzt. Sobald der Werkstoff eine bestimmte Temperatur erreicht, dringt die Schraube unter Vorschub in das Blech ein. Das verdrängte Material fließt dabei am Reibabschnitt vorbei und hinterlässt ein als Durchzug geeignetes Kernloch. Unmittelbar an den Reibabschnitt schließt sich ein Gewindeabschnitt an, welcher in den zuvor hergestellten Durchzug ein Gewinde einfurcht. Die Fügeteile werden somit in einem einzigen Arbeitsgang zu einer lösbaren Schraubverbindung verbunden.

Eine solche Schrauben ist auch als Knochenschraube aus der WO 2004/052219 A1 bekannt.

Aus der DE 39 09 725 C1 bekannte materialverdrängende, gewindeerzeugende Schraube weist eine ballige Reibspitze auf, die völlig ohne Schneidkanten oder Spannuten auskommt. Bei dieser Schraube ist anschließend an die ballige Reibspitze ein sich allmählich aufweitender Abschnitt mit symmetrisch angeordneten, seitlichen Abflachungen vorgesehen. An diesen sich aufweitenden Abschnitt schließt sich ein zylindrischer Abschnitt an, dessen Länge etwa der vierfachen Blechdicke entspricht. Dieser zylindrische Abschnitt geht in den Gewindeabschnitt über, der am Einlauf über vier Gewindegänge verjüngt ausgebildet ist. Wegen des zylindrischen Abschnitts und der verhältnismäßig langen Verjüngung im Gewinde ist bei dieser Schraube die nutzbare Schaftlänge im Verhältnis zur gesamten Schaftlänge klein, so dass die Schraube verhältnismäßig weit über die Rückseite der gefügten Bleche vorsteht und dort einen großen Freiraum benötigt. Wegen der seitlichen Abflachungen ist darüber hinaus die Herstellung dieser Schrauben aufwendig. Die Abflachungen erfordern nämlich zusätzlich zum Einrollen des Gewindes einen weiteren Arbeitsgang.

Eine ähnliche Schraube ist aus der DE 196 34 417 C2 bekannt. Im Unterschied zu der vorbeschriebenen Schraube weist diese Schraube statt einer balligen eine spitz ausgebildete Reibspitze auf. Auch diese Schraube steht in nachteiliger Weise weit über die Rückseite von gefügten Blechen vor.

Nachteilig bei den vorbekannten Schrauben ist zudem, dass diese beim Einbringen in ein Werkstück einen sehr geringen Flächendruck erzeugen, da die jeweilig am Werkstück anliegende Reibfläche verhältnismäßig klein ausgebildet ist. Hierdurch kann es vorkommen, dass nicht genügend Reibungswärme erzeugt wird und die Schraube zu schnell in das noch unzureichend aufgewärmte Material des Werkstücks eindringt, wodurch Risse in dem Werkstück auftreten können, welche sich sehr nachteilig auf die Robustheit der Verbindung von Werkstück und Schraube auswirken.

Ausgehend von diesem Stand der Technik liegt der Erfindung die Aufgabe zugrunde, eine Schraube der eingangs genannten Art zu schaffen, mit der ein sehr hoher Flächendruck beim Einbringen in ein Werkstück erzeugt werden kann, der die Wärmeentstehung begünstigt und die für das Eindringen der Schraube erforderliche axiale Anpresskraft reduziert.

Zur Lösung dieser Aufgabe schlägt die Erfindung ausgehend von einer Schraube der eingangs genannten Art vor, dass die Reibspitze der Schraube mit einem Gewindegang oder Doppelgewindegang versehen, dessen Außendurchmesser größer als der Durchmesser des ersten Teilabschnitts des Reibabschnitts im Grenzbereich zur Bohrspitze ist.

Die erfindungsgemäße ausgeprägte Gewindespitze erzeugt einen sehr hohen Flächendruck, der die Wärmeentstehung begünstigt und die für das Eindringen der Schraube erforderliche axiale Anpresskraft reduziert. Diese Wirkung wird bereits bei einem Gewindegang erzielt, dessen Länge etwa einer Steigung entspricht. Auf diese Weise wird der Schaft der Schraube nicht unnötig verlängert.

Umfangreiche Versuche haben gezeigt, dass man den zwischen der Reibspitze und dem Gewindeabschnitt befindlichen Reibabschnitt deutlich kürzer machen kann, wenn man diesen Reibabschnitt in zwei kegelstumpfförmige Teilabschnitte unterteilt, die fließend ineinander übergehen, wobei der Kegelwinkel des an die Reibspitze angrenzenden ersten Teilabschnitts größer als der Kegelwinkel des an den Gewindeabschnitt angrenzenden zweiten Teilabschnitts ist.

Der Reibabschnitt der erfindungsgemäßen Schraube ist kegelig gestuft. Der erste kegelige Teilabschnitt weitet sich mit einer größeren Steigung auf als der zweite Teilabschnitt. Diese Konstellation macht einen zylindrischen Reibabschnitt verzichtbar. Darüber hinaus funktioniert die Schraube gemäß der Erfindung ohne jegliche Spanabnahme, so dass weder eine kostspielige Schneidkante, noch eine Spannut erforderlich ist. Die Fertigung der Schraube gemäß der Erfindung ist insofern besonders einfach, als man die Formgebung des Gewindes einerseits und des abgestuften Reibabschnitts andererseits in einem einzigen Arbeitsgang zwischen zwei Gewindewalzbacken durchführen kann.

Der Kegelwinkel des ersten Teilabschnitts liegt vorzugsweise in einem Bereich zwischen 25° und 40°; der Kegelwinkel des zweiten, stumpferen Teilabschnitts liegt entsprechend 10° niedriger. Als optimal hat sich eine Winkelpaarung von 30° und 20° erwiesen. Hiermit ist ein guter Kompromiss zwischen Drehgeschwindigkeit und Anpresskraft einerseits und der für den Verdrängungsvorgang erforderlichen Schaftlänge andererseits gefunden.

Besonders günstige Montageparameter, insbesondere ein günstiger Drehmomentverlauf beim Einbringen der Schraube, ergeben sich, wenn der Gewindeabschnitt und der Reibabschnitt Gleichdickquerschnitte haben. Die Umfangslinie eines solchen Gleichdickquerschnitts ist eine Kurve konstanter Dicke, d. h. eine geschlossene Linie, die in jeder Lage innerhalb eines geschlossenen Quadrates stets alle vier Seiten berührt. Die Verwendung der Gleichdickquerschnitte ersetzt in idealer Weise die z. B. beim Stand der Technik gemäß DE 39 09 725 C1 verwendeten seitlichen Abflachungen am Schaft der Schraube. Hier wie dort kommt es zu einer gezielten Verkleinerung der Berührungsflächen zwischen Schraube und Blech, was in diesen Bereichen zu einer höheren Flächenpressung führt. Die Gleichdickquerschnitte haben jedoch den Vorteil, dass sie aufgrund ihrer Geometrie und abweichend von seitlichen Abflachungen des Schafts in einem Arbeitsgang zusammen mit dem Gewinde durch Walzen bearbeitet werden können.

Um bei der Herstellung möglichst wenig Verformungsarbeit leisten zu müssen, haben die Gleichdickquerschnitte einen dreieckige Grundform mit abgerundeten Ecken. Ein solches abgerundetes Reuleaux-Dreieck ist weitgehend der Kreisform angenähert. Ein Schraubenschaft mit einem solchen vom Kreisquerschnitt abweichenden Querschnitt lässt sich ohne weiteres über seine gesamte Länge zwischen den Formbacken einer Gewindewalzmaschine bearbeiten.

Das Gewinde auf dem Gewindeabschnitt kann doppelgängig ausgebildet sein. Ein solches doppelgängiges Gewinde halbiert die Montagezeit.

Der Gewindegang der Reibspitze der Schraube kann rechtsgängig oder linksgängig ausgeführt werden. Die linksgängige Ausführung ist insbesondere für dünne Bleche geeignet und verhindert, dass das Blech durch zu frühres Einstechen der Reibspitze aufreißt. Die rechtsgängige Ausführung ist demgegenüber für dickere und härter Bleche geeignet, bei denen die zuletzt genannte Gefahr nicht besteht und für ein möglichst schnelles Eindringen der Reibspitze gesorgt werden soll.

Die Schraube gemäß der Erfindung ist vorzugsweise aus einem Gleichdickrohling mit abgerundeten Ecken hergestellt. Ein solcher Gleichdickrohling kann trotz seiner von der Kreisform abweichenden Form bei der Herstellung der Schraube in einem einzigen Walzvorgang umgeformt werden.

Gegenstand der Erfindung ist weiterhin ein Verfahren zur Herstellung einer Schraube der oben beschriebenen Art, welches sich dadurch kennzeichnet, dass zunächst ein Gleichdickrohling gepresst und anschließend in einem einzigen Walzvorgang in seine endgültige Form umgeformt wird. Dieses Fertigungsverfahren ist aus den oben genannten Gründen besonders wirtschaftlich und vermeidet die sonst bei unrunden Schrauben erforderlichen weiteren Arbeitsschritte.

Die vorliegende Erfindung soll nun anhand eines bevorzugten Ausführungsbeispiels dargestellt werden. Es zeigen:
- Fig. 1:: Eine Schraube gemäß der Erfindung in Seitenansicht;
- Fig. 2:: einen Schnitt entlang der Linie A-B in Figur 1;
- Fig. 3:: einen Querschnitt entlang der Linie C-D in Figur 1;
- Fig. 4:: einen Querschnitt entlang der Linie E-F in Figur 1;
- Fig. 5:: einen Querschnitt durch einen gleichdick- Rohling mit abgerundeten Ecken.

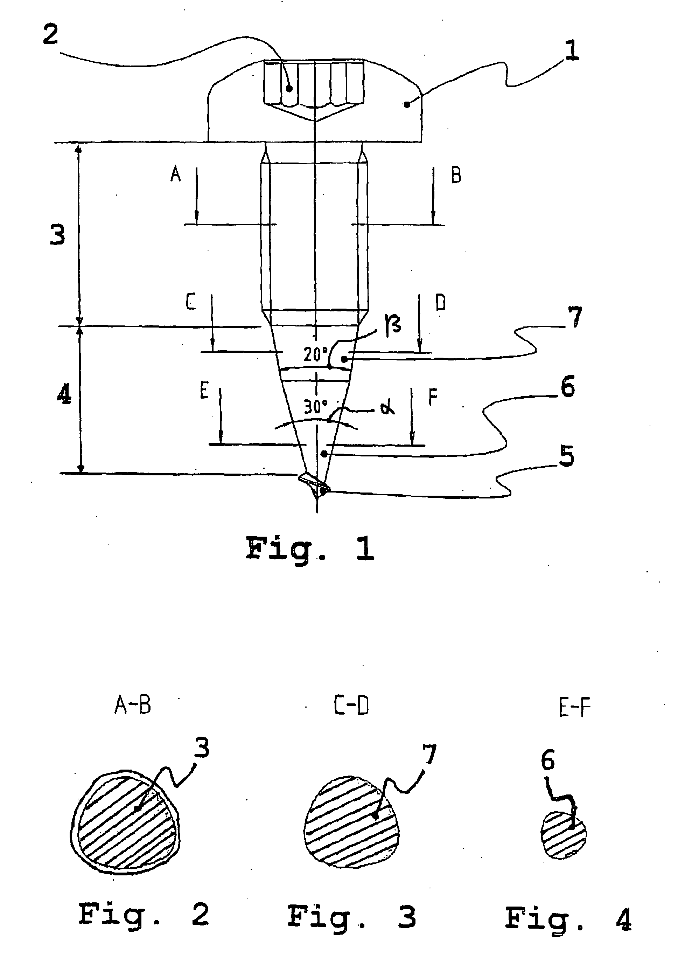

Die in Figur 1 dargestellte Schraube ist mit einem üblichen Kopf 1 in Linsenform versehen. Als Werkzeugeingriff 2 dient ein Innensechsrund. Die Gestalt des Kopfes 1 und des Werkzeugeingriffs 2 ist für die Funktion der Erfindung unwesentlich.

Der Schaft der Schraube unterteilt sich in einen Gewindeabschnitt 3, einen Reibabschnitt 4 und eine Reibspitze 5. Der Gewindeabschnitt 3 ist mit einem metrischen Gewinde versehen.

Unmittelbar an den Gewindeabschnitt 3 schließt sich der Reibabschnitt 4 an. Dieser besteht aus zwei unmittelbar aufeinander folgenden, gewindefreien Teilabschnitten 6 und 7 die - wie in den Figuren 3 und 4 dargestellt - einen annähernd kreisrunden Querschnitt aufweisen. Der erste Teilabschnitt 6 grenzt unmittelbar an die Reibspitze 5 an; sein Kegelwinkel α beträgt 30°. Der zweite Teilabschnitt 7 grenzt unmittelbar an den Gewindeabschnitt 3 an und weist einen Kegelwinkel β von 20° auf. Die beiden Teilabschnitt 6 und 7 gehen fließend ineinander über.

Als Reibspitze 5 dient ein Gewindegang, der sich Ober die Länge einer Steigung erstreckt. Der Außendurchmesser dieses Gewindegangs ist deutlich größer, als der Querschnitt des Reibabschnitts im Grenzbereich zur Reibspitze 5. Der Durchmesser der Schraube nimmt somit beim Übergang von der Reibspitze 5 zum ersten Teilabschnitt 6 des Reibabschnittes 4 zunächst ab und wächst dann aber in Richtung zum zweiten Teilabschnitt 7 an.

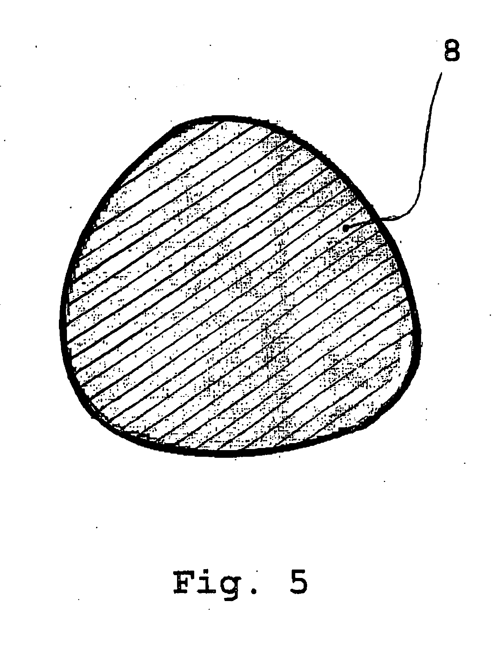

Die Schraube ist aus einem Gleichdickrohling 8 mit abgerundeten Ecken geformt (vgl. Figur 5). Diese Grundform des Rohlings bleibt bei der Bearbeitung des Rohlings in einer Gewindewalzmaschine erhalten. Der besondere Vorteil dieses Querschnitts liegt darin, dass trotz seiner unrunden Form eine Bearbeitung in einem einzigen Walzvorgang möglich ist.

## Patentansprüche

1. Materialverdrängende, gewindeerzeugende Schraube mit einem Kopf (1) und einem Reibabschnitt (4), der sich von einer Reibspitze (5) zu einem am Kopf (1) auslaufenden Gewindeabschnitt (3) erstreckt, wobei der Reibabschnitt (4) von zwei kegelstumpfförmigen oder zumindest annähernd kegelstumpfförmigen, sich in Richtung auf den Kopf (1) aufweitenden Teilabschnitten (6, 7) gebildet wird, die unmittelbar aneinander angrenzen und fließend ineinander übergehen, wobei der Kegelwinkel (α) des an die Reibspitze (5) angrenzenden ersten Teilabschnittes (6) größer als der Kegelwinkel (β) des an den Gewindeabschnitt (3) angrenzenden zweiten Teilabschnitts (7), **dadurch gekennzeichnet, dass** die Reibspitze (5) mit einem Gewindegang oder Doppelgewindegang versehen ist, dessen Außendurchmesser größer ist als der Durchmesser des ersten Teilabschnitts (6) des Reibabschnitts (4) im Grenzbereich zur Reibspitze (5).

2. Schraube nach Anspruch 1, **dadurch gekennzeichnet, dass** der Kegelwinkel (α) des ersten Teilabschnitts (6) 25°bis 40° beträgt und der Kegelwinkel (β) des zweiten Teilabschnitts (7) 15°bis 30° beträgt.

3. Schraube nach Anspruch 2, **dadurch gekennzeichnet, dass** der Kegelwinkel (α) des ersten Teilabschnitts (6) 30° beträgt und der Kegelwinkel (β) des zweiten Teilabschnitts (7) 20° beträgt.

4. Schraube nach Anspruch 1, 2 oder 3, **dadurch gekennzeichnet, dass** der Gewindeabschnitt (3) und der sich anschließende Reibanschluss (4) Gleichdickquerschnitte haben.

5. Schraube nach Anspruch 4, **dadurch gekennzeichnet, dass** die Gleichdickquerschnitte eine dreieckige Grundform mit abgerundeten Ecken haben.

6. Schraube nach einem der Ansprüche 1 bis 5, **dadurch gekennzeichnet, dass** der Gewindeabschnitt (3) doppelgängig ist.

7. Schraube nach einem der Ansprüche 1 bis 6, **dadurch gekennzeichnet, dass** sich der Gewindegang oder Doppelgewindegang über die Länge einer Steigung erstreckt.

8. Schraube nach einem der Ansprüche 1 bis 7, **dadurch gekennzeichnet, dass** der Gewindegang linksgängig ist.

9. Schraube nach einem der Ansprüche 1 bis 7, **dadurch gekennzeichnet, dass** der Gewindegang rechtsgängig ist.

10. Schraube nach einem der Ansprüche 4 bis 9, **dadurch gekennzeichnet, dass** sie aus einem Gleichdickrohling (8) geformt ist.

## Claims

1. A material-displacing, thread-producing screw comprising a head (1) and a cutting portion (4) extending from a cutting tip (5) to a screwthread portion (3) terminating at the head (1), wherein the cutting portion (4) is formed by two frustoconical or at least approximately frustoconical parts (6, 7) which are enlarged in a direction towards the head (1) and which directly adjoin each other and blend smoothly into each other, wherein the cone angle (α) of the first part (6) adjoining the cutting tip (5) is greater than the cone angle (β) of the second part (7) adjoining the screwthread portion (3), **characterised in that** the cutting tip (5) is provided with a thread flight or double thread flight, the outside diameter of which is larger than the diameter of the first part (6) of the cutting portion (4) in the boundary region to the cutting tip (5).

2. A screw according to claim 1 **characterised in that** the cone angle (α) of the first part (6) is 25° to 40° and the cone angle (β) of the second part (7) is 15° to 30°.

3. A screw according to claim 2 **characterised in that** the cone angle (α) of the first part (6) is 30° and the cone angle (β) of the second part (7) is 20°.

4. A screw according to claim 1, claim 2 or claim 3 **characterised in that** the screwthread portion (3) and the adjoining cutting portion (4) are of equal-thickness cross-sections.

5. A screw according to claim 4 **characterised in that** the equal-thickness cross-sections are of a triangular basic shape with rounded corners.

6. A screw according to one of claims 1 to 5 **characterised in that** the screwthread portion (3) has a double flight.

7. A screw according to one of claims 1 to 6 **characterised in that** the thread flight or double thread flight extends over the length of a pitch.

8. A screw according to one of claims 1 to 7 **characterised in that** the thread flight is left-handed.

9. A screw according to one of claims 1 to 7 **characterised in that** the thread flight is right-handed.

10. A screw according to one of claims 4 to 9 **characterised in that** it is formed from an equal-thickness blank (8).

## Revendications

1. Vis auto-taraudeuse, repoussant du matériau, avec une tête (1) et une section de frottement (4) qui s'étend d'une pointe de frottement (5) à une section de filetage (3) se terminant à la tête (1), où la section de frottement (4) est formée par deux sections de frottement (6, 7) tronconiques ou au moins approximativement tronconiques, s'élargissant en direction de la tête (1), qui sont directement avoisinantes et se rejoignent uniformément, où l'angle de cône (α) de la première section partielle (6) avoisinant la pointe de frottement (5) est plus grand que l'angle de cône (β) de la deuxième section partielle (7) avoisinant la section de filetage (3), **caractérisée en ce que** la pointe de frottement (5) est munie d'un pas de filetage ou d'un pas de filetage double dont le diamètre extérieur est plus grand que le diamètre de la première section partielle (6) de la section de frottement (4) dans la zone limite vers la pointe de frottement (5).

2. Vis selon la revendication 1, **caractérisée en ce que** l'angle de cône (α) de la première section partielle (6) est de 25° à 40°, et l'angle de cône (β) de la deuxième section partielle (7) est de 15° à 30°.

3. Vis selon la revendication 2, **caractérisée en ce que** l'angle de cône (α) de la première section partielle (6) est de 30°, et l'angle de cône (β) de la deuxième section partielle (7) est de 20°.

4. Vis selon la revendication 1, 2 ou 3, **caractérisée en ce que** la section de filetage (3) et la section de frottement (4) qui fait suite ont des sections transversales d'épaisseur égale.

5. Vis selon la revendication 4, **caractérisée en ce que** les sections transversales d'épaisseur égale ont une forme de base triangulaire avec des coins arrondis.

6. Vis selon l'une des revendications 1 à 5, **caractérisée en ce que** la section de filetage (3) est à pas double.

7. Vis selon l'une des revendications 1 à 6, **caractérisée en ce que** le pas de filetage ou le pas de filetage double s'étend sur la longueur d'un pas.

8. Vis selon l'une des revendications 1 à 7, **caractérisée en ce que** le pas de filetage est un pas à gauche.

9. Vis selon l'une des revendications 1 à 7, **caractérisée en ce que** le pas de filetage est un pas à droite.

10. Vis selon l'une des revendications 4 à 9, **caractérisée en ce que** celle-ci est formée à partir d'une ébauche d'épaisseur égale (8).
